# EUROPÄISCHE PATENTSCHRIFT

(11) **EP 2 062 715 B1**
(45) Veröffentlichungstag und Bekanntmachung des Hinweises auf die Patenterteilung: **11.04.2012**
(21) Anmeldenummer: 07022443.1
(22) Anmeldetag: 20.11.2007
(51) Int. Cl.: B29C 45/33

(54) **Vorrichtung zur Verlängerung des Kulissenhubs in einem Spritzgusswerkzeug**
Device for lengthening the runner stroke in an injection moulding die
Dispositif d'allongement de la course d'une coulisse dans un moule d'injection

(43) Veröffentlichungstag der Anmeldung: 27.05.2009
(73) Patentinhaber: Ifw Manfred Otte GmbH, 4563 Micheldorf (AT)
(72) Erfinder: Bernögger, Thomas, 4564 Klaus (AT); Otte, Roland, 4563 Micheldorf (AT)
(74) Vertreter: Landgraf, Elvira

(56) Entgegenhaltungen:
- EP-A- 0 548 823
- EP-A- 1 621 316

## Beschreibung

Die Erfindung betrifft ein Verfahren zur Verlängerung des Kulissenhubs in einer Spritzgussform.

Aus der EP 548 823 A, die ein Verfahren gemäß dem Oberbegriff des Anspruchs 1 beschreibt, ist bekannt, das Aus- und Einschieben des Formkemes bewegungsschlüssig mit dem Öffnen und Schließen der Außenform zu koppeln. Dabei ist ein die Trennebene der Außenform überbrückender Schieber vorgesehen, der zwei seitliche Platten mit Führungsnuten aufweist, in die Vorsprünge des Formkerns eingreifen.
Um den Öffnungsweg zu verlängern, können die Führungsnuten in einem teleskopisch ausfahrbaren Element ausgebildet sein.

Gemäß DE 94 15 523 U wird in die bewegungsschlüssige Koppelung zwischen dem Schieber und dem Formkern auch das Betätigungsglied zur vorausgehenden Verschwenkung der Hebel des Formwulstes einbezogen.

Da die größten Kräfte in der Schließstellung zu Beginn des Öffnungsweges in den Formkern einzuleiten sind, sind die Vorsprünge beidseitig in einer Axialebene des zu entformenden Formteils, in der die Trennebene der Außenform liegt, angeordnet, und stellen eine axiale Krafteinleitung aus dem senkrecht dazu sich bewegenden Schieber sicher. Diese Vorsprünge liegen am Ende des Öffnungsweges am Ende der Führungsschlitze, wobei die Erstreckung des Schiebers in seiner Bewegungsrichtung durch das maximale mögliche Ausmaß des Übergriffs über die Trennebene in der Schließstellung der Form beschränkt ist.

Aus EP 1 621 316 B1 ist eine Spritzgießform zur Herstellung von Fittings od. dgl. aus thermoplastischem Kunststoff bekannt, die an der Innenseite wenigstens eine Ringnut aufweisen, mit einer in einer Trennebene teilbaren Außenform, mit einem entlang einer Formhälfte der Außenform axial verschiebbaren Formkern an dem ein komplementärer Formwulst für die Ringnut ausgebildet ist, der durch Ringsegmente tragende Hebel gebildet wird, wobei im Formkern ein Betätigungsglied zur Verschwenkung der Hebel axial verschiebbar angeordnet ist, und mit einem die Trennebene der Außenform überbrückenden, mit der zweiten Formhälfte verbundenen Schieber mit unterschiedlich schrägen Führungsnuten, in die in der Trennebene angeordnete, seitliche Vorsprünge sowohl des Formkerns als auch des Betätigungsglieds bewegungsschlüssig eingreifen, wobei zwischen dem Schieber und zumindest dem Formkern eine den Öffnungsweg des Formkerns verlängernde Führung mit Abstand zur Trennebene ausgebildet ist.

Aufgabe der Erfindung war es, in einfacher Weise einen größeren Öffnungsweg des Formkerns zu erzielen.

Gegenstand der Erfindung ist daher Verfahren zur Verlängerung des Kulissenhubs gemäß Anspruch 1.

Der Vorteil ist das an einem bereits bestehenden Schieber keine Veränderungen vorzunehmen sind. Durch die Hubverlängerung ist eine bessere Anpassung der Krafteinwirkung während der Öffnung als bisher möglich. Die Krafteinwirkung beim Öffnen der Form bewegt sich in einem günstigen Bereich.

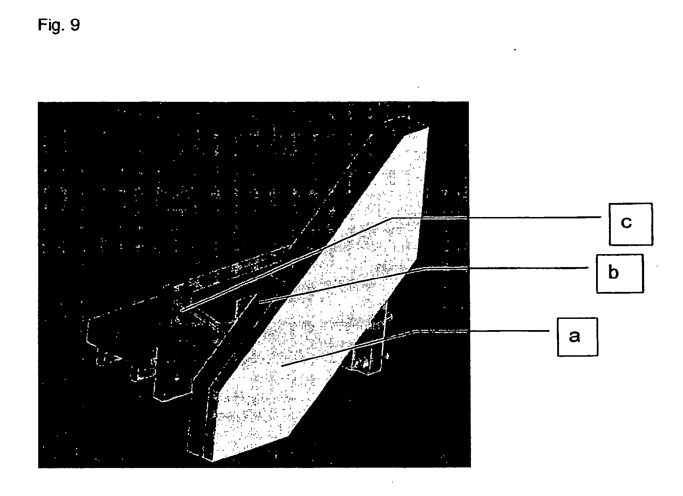

Das System ist in Figur 9 dargestellt und besteht aus einer Hauptkulisse (a), einer beweglichen Verlängerungskulisse (b) und einer Steuerplatte (c).

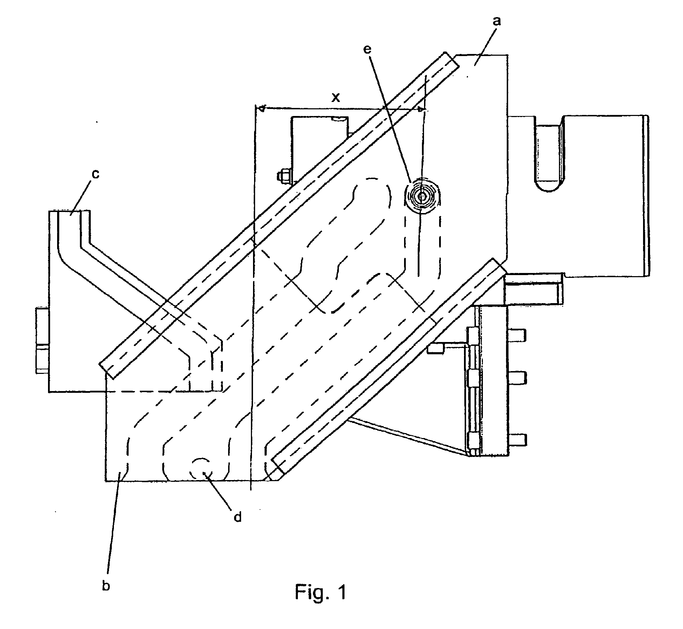

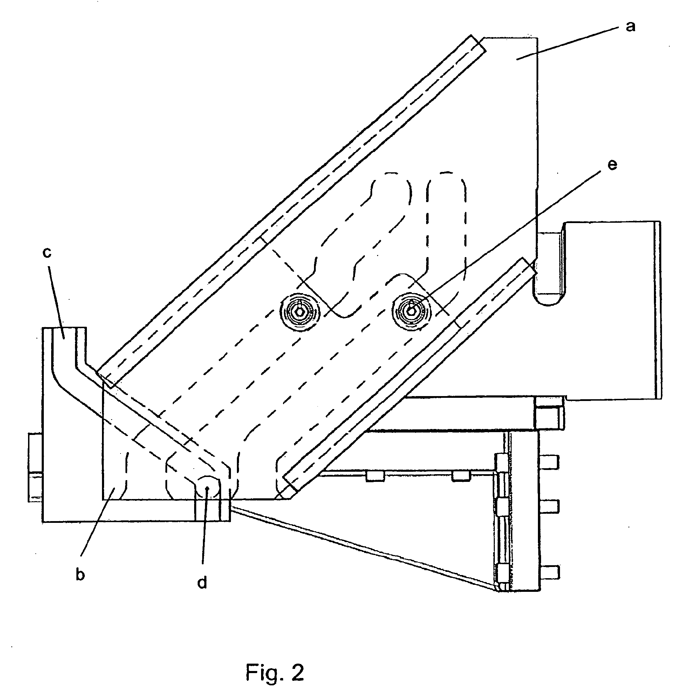

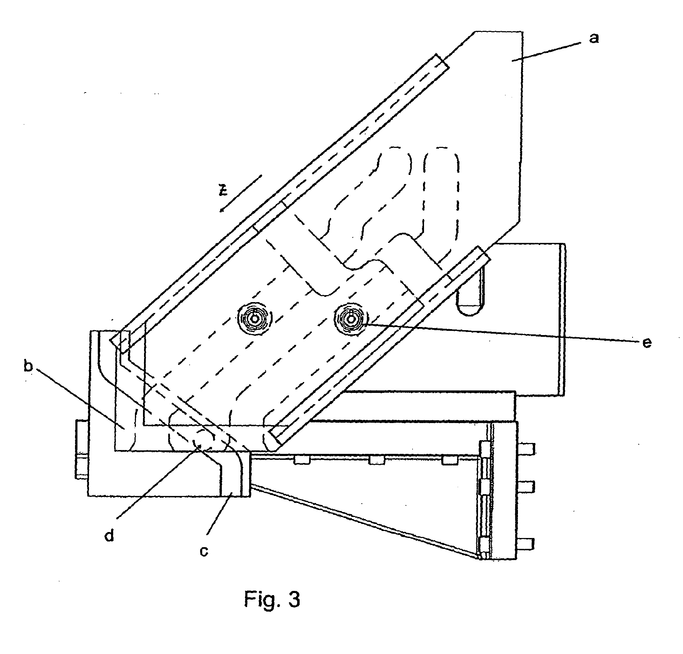

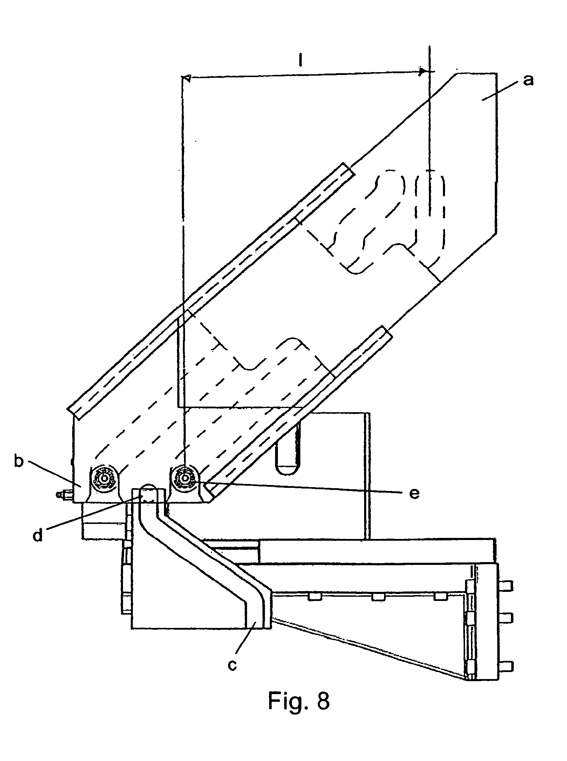

In den Figuren 1 bis 8 ist der Weg bzw. sind die unterschiedlichen Positionen während einer Öffnungsvorgangs der Form dargestellt:
In Fig. 1 ist die Ausgangsposition dargestellt. Darin bedeuten a die Hauptkulisse, b die bewegliche Verlängerungskulisse und c die Steuerplatte.
In Fig. 2 ist der Beginn des Öffnungsvorgangs der Form dargestellt.
   Die Kurvenrollen des Schiebers bewegen sich nur in der Hauptkulisse a. Sobald die Kurvenrollen (e) des Schiebers in den Bereich der beweglichen Verlängerungskulisse (b) kommen greift eine weitere Kurvenrolle (d) die an der Verlängerungskulisse befestigt ist in die unbewegliche Steuerplatte c ein. Die Kurvenrollen des Schiebers bewegen sich in der Verlängerungskulisse, diese wird durch die Steuerplatte in z-Richtung (Fig. 3) weggezogen.

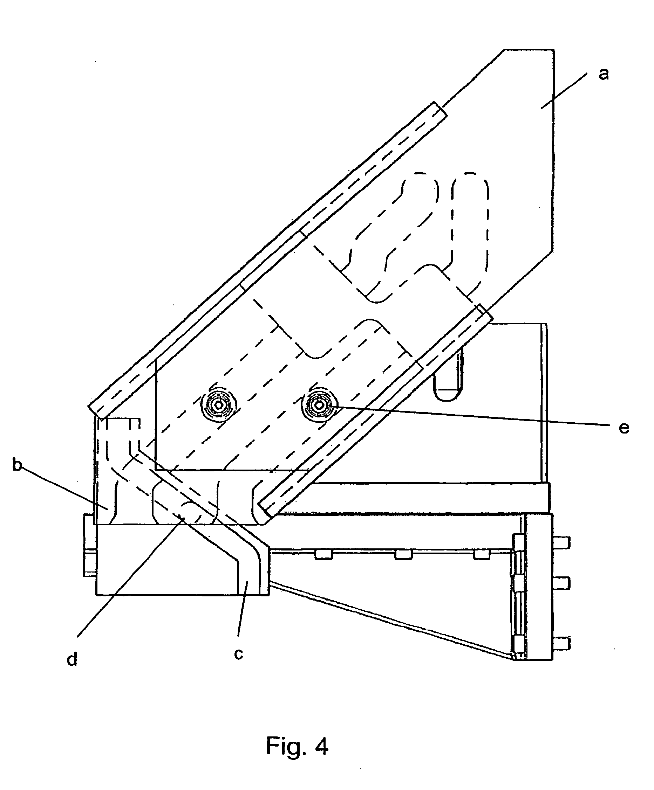

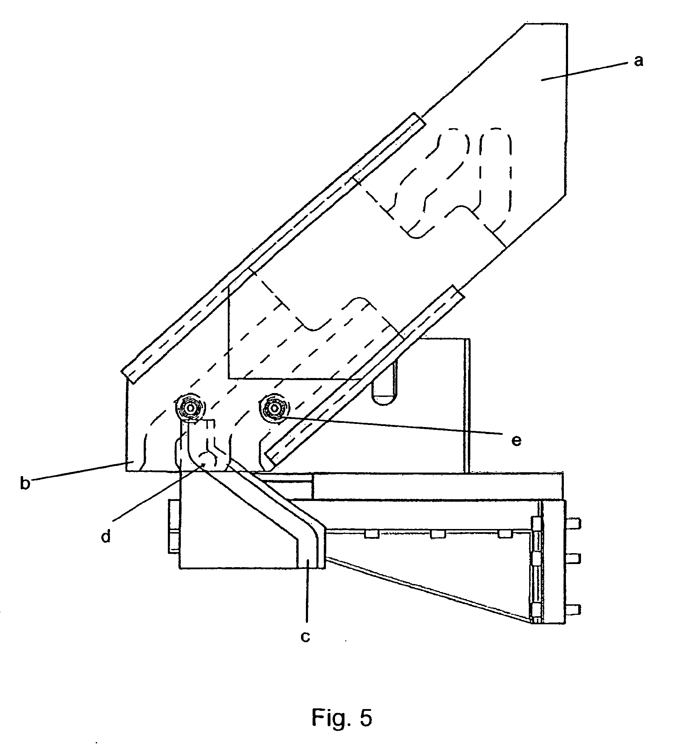

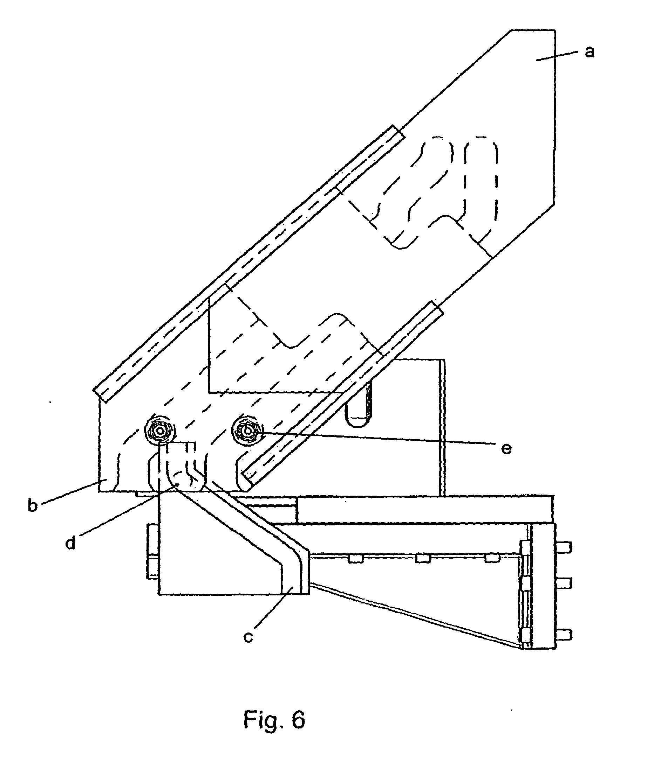

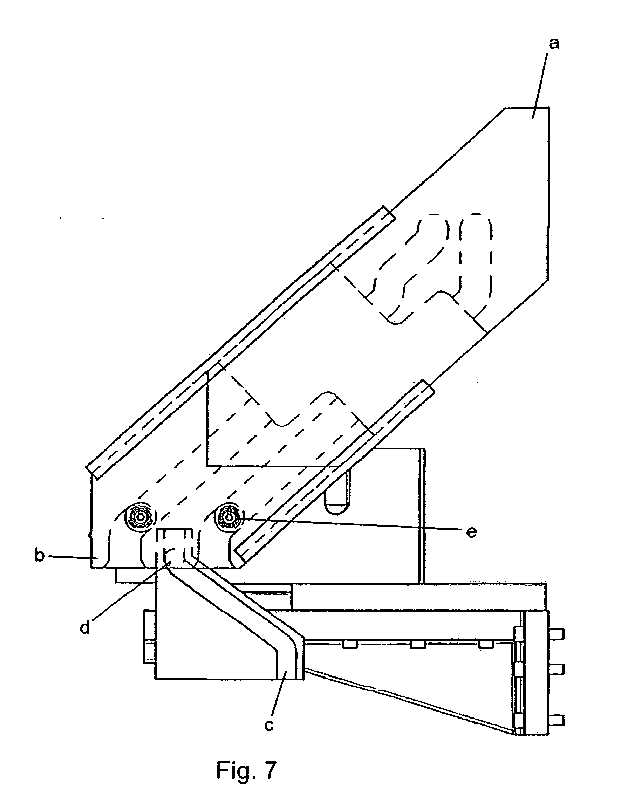

In den Figuren 4 bis 8 ist der weitere Öffnungsweg dargestellt.
   Durch dieses Ausfahren der Verlängerungskulisse ergibt sich ein erhöhter Hub des Schiebers (Abstand I in Fig.8 im Vergleich zu Abstand x in Fig. 1).

Beim Schließen der Form ist die Folge der Schritte umgekehrt.

Bisher wurde diese Hubverlängerung mit einer zusätzlichen Kulissenbahn gelöst. Dabei ist man aber mit der Hubverlängerung sehr stark durch die Höhe der Form eingeschränkt. Außerdem ist hierbei eine wesentliche Systemänderung des gesamten Schiebers notwendig. Die Krafteinwirkung auf den Schieber während des Öffnungshubes ist dabei teilweise sehr ungünstig.

## Patentansprüche

1. Verfahren zur Verlängerung des Kulissenhubs in einer Spritzgießform, wobei der Kulissenhub eine Hauptkulisse und eine Verlängerungskulisse umfasst und wobei sich beim Öffnungsvorgang der Form die Kurvenrollen (e) eines Schiebers in der Hauptkulisse bewegen, **dadurch gekennzeichnet, dass** bei Übergang der Kurvenrollen (e) in den Bereich der beweglichen Verlängerungskulisse (b) eine weitere Kurvenrolle (d), die an der Verlängerungskulisse befestigt ist, in eine unbewegliche Steuerplatte (c) eingreift, wodurch sich die Kurvenrollen des Schiebers in der Verlängerungskulisse bewegen, wodurch diese Verlängerungskulisse durch die Steuerplatte in der Längsrichtung (z) der Kulisse von der Hauptkulisse weggezogen wird.

## Claims

1. Method for lengthening the runner stroke in an injection mould, the runner stroke comprising a main runner and a lengthening runner and the cam rollers (e) of a slide moving in the main runner during the opening operation of the mould, **characterized in that**, when the cam rollers (e) are going over into the region of the movable lengthening runner (b), a further cam roller (d), which is fastened to the lengthening runner, engages in an immovable control plate (c), whereby the cam rollers of the slide move in the lengthening runner, whereby this lengthening runner is drawn by the control plate away from the main runner in the longitudinal direction (z) of the runner.

## Revendications

1. Procédé d'allongement de la course d'une coulisse dans un moule d'injection, sachant que la course d'une coulisse comporte une coulisse principale et une coulisse d'allongement et que lors du processus d'ouverture du moule, les galets de guidage (e) d'un coulisseau se déplacent dans la coulisse principale, **caractérisé en ce que** lors du passage des galets de guidage dans la zone de la coulisse d'allongement (b) mobile, un autre galet de guidage (d), qui est fixé au niveau de la coulisse d'allongement, vient en prise avec une plaque de commande (c) fixe, ce qui rend possible le déplacement des galets de guidage du coulisseau dans la coulisse d'allongement, ce qui permet de retirer de la coulisse principale cette coulisse d'allongement grâce à la plaque de commande dans le sens de la longueur (Z) de la coulisse.
